# EUROPEAN PATENT SPECIFICATION

(11) **EP 2 698 223 B1**
(45) Date of publication and mention of the grant of the patent: **14.10.2015**
(21) Application number: 13179865.4
(22) Date of filing: 09.08.2013
(51) Int. Cl.: B23K 9/02, B23K 9/025, B23K 9/173, B23K 26/26, B23K 31/00, B23K 33/00, B23P 6/00, B23P 15/04, F01D 5/00

(54) **A process of welding to repair thick sections using two arc welding devices and a laser device**
Verfahren zum Schweissen zur Reparatur von dicken Abschnitten unter Verwendung von zwei Lichtbogenschweissgeräten und einem Laserstrahlgerät
Procédé de soudage pour la réparation de sections épaisses utilisant deux dispositifs de soudage à l'arc et un dispositif de soudage laser

(30) Priority: 13.08.2012 US 201213572880
(43) Date of publication of application: 19.02.2014
(73) Proprietor: General Electric Company, Schenectady, NY 12345 (US)
(72) Inventor: Lin, Dechao, Greenville, SC South Carolina 29615 (US); Janawitz, Jamison William, Overland Park, KS Kansas 66223 (US); Bucci, David Vincent, Greenville, SC South Carolina 29615 (US); Souther, Ron Lee, Greenville, SC South Carolina 29615 (US); O'Connell, Matthew James, Greenville, SC South Carolina 29615 (US); Kottilingam, Srikanth Chandrudu, Greenville, SC South Carolina 29615 (US)
(74) Representative: Cleary, Fidelma

(56) References cited:
- DE-A1- 10 037 104
- JP-A- S6 092 075
- JP-A- 2004 223 543
- JP-A- 2011 062 737
- US-A- 4 213 025

## Description

The present invention is directed to a method of joining thick sections according to the preamble of claim 1 (see, for example, US 4 213 025 A), and specifically to a double-sided weld repair utilizing a tribrid laser and tribrid laser welding method for the root pass of a narrow groove weld.

### BACKGROUND OF THE INVENTION

Welding is used to join together sections of metal. Various types of welding exist to accomplish welding of similar metals in thick sections, similar metals in thin sections, dissimilar metals in thin and thick sections and thin sections to thick sections with both similar and dissimilar metals. Different problems arise in all of the various welding arrangements. Various welding techniques have been utilized to make these welds including, but not limited to, for example, electroslag welding, shielded metal arc welding (SMAW), gas tungsten arc welding (GTAW), gas metal arc welding (GMAW), and laser welding.

In thick-section welding, fusion welding is required to fully join the two sections together. One of the challenges of making such welds is the amount of filler metal required to achieve a full penetration weld. It may be necessary to provide a suitable preheat to successfully accomplish such a weld. Even with the preheat, the large amounts of weld metal may result in residual stresses that are so severe that distortion of the parts may occur, particularly as the root or base weld is accomplished, rendering the resulting part unsuitable for use in its intended application. Various solutions have been proposed and have had less than full success. Some of the solutions require special fixturing, while other solutions require further preheat that may adversely affect the grain structure of the material in the heat affected zone (HAZ) or in the base material of the sections adjacent the HAZ. Still other solutions rely on the skill of the welder to provide a successful weld, a high level of skill being required.

JP 2004 223543 describes a compound welding method in which items to be welded are butted to each other and a groove provided on a butted surface is first welded by laser beams and then by arc welding. Laser beams are irradiated over a molten pool formed by the arc welding and a key hole formed. Welding is performed by allowing weld metal by the arc welding to flow into the key hole and into a clearance for forming the key hole. US 4213025 describes an apparatus for connecting metallic parts by means of arc fusion welding. A low volume welding seam is produced (narrow gap welding), wherein the workpiece parts to be joined are initially welded at their butt joint by means of electron-beam welding, plasma-arc welding, laser-beam welding or argon arc-welding to produce a base seam with or without filler material, and thereafter the workpiece flanks forming a narrow gap are united by alternately depositing weld beads at first one and the other workpiece flank by submerged-arc welding. JP 2011 062737 describes a composite laser beam and arc welding method, wherein a uniform bead can be formed even when the welding rate is high.

What is desired is a method useful for fusion welding of thick sections that can be accomplished by providing a welding process that provides a full penetration weld while maintaining the preheat temperature on both sides of the joint at the root pass and minimizing distortion as a result of the welding process.

### BRIEF DESCRIPTION OF THE INVENTION

The present invention provides a method of joining metal sections while maintaining the preheat and minimizing distortion according to claim 1, and comprising the steps of providing a first section having first substantially L-shaped groove face and providing a second section having a second substantially L-shaped groove face. The first groove face of the first section is then aligned against the second groove face of the second section to form a narrow groove in which the metal sections form a butt joint along an interface at a root having a centerline with a groove above the root, wherein the first groove face and the second groove face are separated by a predetermined distance above the butt joint. The narrow groove joint is preheated to a preselected temperature, as required. A first arc welding device, a second arc welding device and a laser welding apparatus are provided. The first arc welding device is placed against the root on a side of the butt joint opposite the groove. The first arc welding device is offset from the root centerline. The second arc welding device is aligned against the root within the groove and offset laterally with respect to the root centerline from the first arc welding device, which is on the opposite side of the root centerline. The laser welding apparatus is aligned so that the laser beam is positioned within the groove and aligned with the root centerline, and the laser beam is aligned with the root centerline, at the interface. Power is simultaneously applied to the first arc welding device to strike an arc, the second arc welding device to strike an arc and the laser welding apparatus establish a stable keyhole while forming a common pool of molten metal at the root which solidifies on cooling to join the first and second groove face at the root without burning through the root. Filler metal is supplied with the first and second arc welding devices. The first and second arc welding devices and the laser welding apparatus are then moved simultaneously relative to the root to form a full penetration weld along a length of the root pass.

Utilization of two arc welding devices heat the joint on both sides so that the preheat temperature of the entire joint can be maintained during the welding. In addition, adjusting the parameter settings to achieve a different filler metal deposition rate on both arc welders will intentionally generate a predicted deformation because of the metal shrinkage during solidification at the root pass so as to compensate for the welding-induced deformation on the following filling passes to make the final weld without distortion. As used herein, the longitudinal direction is the direction of welding, that is the direction that the weld apparatus moves within or parallel to the groove, and the lateral direction is substantially transverse to the direction of welding.

After the root pass is formed into the full penetration weld using the tribrid welding apparatus, it is inspected for indications that may be defects using suitable nondestructive testing techniques. After any unacceptable indications are removed, the weld may be completed by filling the groove using any acceptable weld technique that does not severely distort the metal sections being joined.

There are several advantages provided by this technique. First, the technique enables the repair of thick-sectioned parts that otherwise require scrapping, as traditional arc welding of thick-sectioned parts may provide unacceptable distortion.

The technique set forth herein further allows for the use of a narrow groove joint while minimizing the amount of weld filler material required to fill the narrow groove joint.

The technique set forth herein further increases the speed of welding of the joint, which increases productivity providing further advantages over either part replacement or other available welding techniques.

The technique set forth herein further allows for mitigation of weld-induced distortion because of the double-sided welding.

The technique set forth herein further increases the flexibility to deposit different amounts of filler material on either side of the joint by adjusting the filler metal deposition rate, which can be used to make a pre-deformed joint at the root pass.

The technique set forth herein further increases the maintenance capacity of preheat on both sides of the joint when two arc welders are placed on either side of the joint.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a perspective view of a steam turbine part, a N2 hook fit that has experienced crack damage in its fillet region during service.
Figure 2 depicts a non-narrow groove weld joint preparation and the narrow groove weld joint preparation of the present invention.
Figure 3 depicts a cross-section of a narrow groove weld joint with the root pass weld completed.
Figure 4 depicts a cross-section of a narrow groove weld joint along the interface of the weld joint of Figure 2 depicting the position of the welding apparatus with respect to the welding direction.
Figure 5 depicts the cross-section of the narrow groove weld joint partially filled with at least one fill pass over the root pass.
Figure 6 depicts the tribrid laser welding apparatus of the present invention in demonstration mode.
Figure 7 depicts a demonstration workpiece using the demonstration mode of Figure 6 after completion of welding, showing both the narrow groove weld joint preparation filled with filler metal on the groove side and the side opposite the groove side, the root pass welded using the tribrid welding technique and the subsequent fill layers welded using a hybrid welding technique.
Figure 8 depicts a narrow groove weld joint preparation in which the root pass has been welded in accordance with the present invention, and in which identical GMAW parameters are used on both sides of the narrow groove weld joint.
Figure 9 depicts a narrow groove weld joint preparation in which the root pass has been welded in accordance with the present invention, and in which different GMAW parameters are used on both sides of the narrow groove weld joint, for the correction of distortion as additional passes are applied in the groove.
Figure 10 is a perspective view of the apparatus of the present invention depicting a first GMAW welding torch on the first side of the demonstration plate and the second GMAW welding torch with a laser welding apparatus on the second side of the demonstration plate.

Wherever possible, the same reference numbers will be used throughout the drawings to represent the same parts.

### DETAILED DESCRIPTION OF THE INVENTION

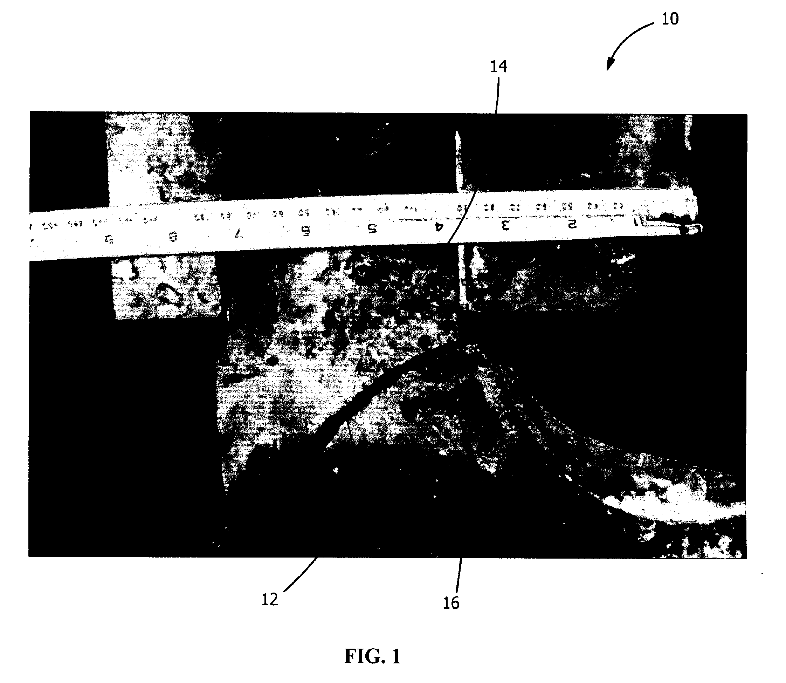

Provided is an exemplary embodiment of the present invention. Figure 1 depicts a steam turbine N2 hook fit 10 that has experienced cracking due to service in the steam turbine and is exemplary of a thick article whose service life is over if a repair without distortion cannot be accomplished. The only solution to a cracked part such as this N2 hook fit 10 is replacement if no repair is available or if repair results in weld distortion. The steam turbine N2 hook fit 10 is a Cr-Mo-V steel part, although the weld technique is suitable for use for any weld repair in which the part has a thick cross section, and weld distortion due to weld repair using conventional techniques prevents continued use of the part. Traditional available arc welding techniques such as V-groove weld joints or J-groove weld joints are time consuming and require a significant amount of filler metal, while techniques such as submerged arc welding and electroslag welding provide heat input that results in weld induced distortion. These traditional arc welding methods also cannot run at high welding speeds, and defects such as lack of penetration or lack of fusion are common.

Referring to Figure 1 again, hook fit 10 that has been removed from service has experienced a crack 12, dividing hook fit into a top 14 and a base 16. This defect is typically observed in the fillet region of N2 hook fit 10 as a result of service in a steam turbine. Hook fit 10 is unusable as is, requiring replacement or repair. Suitable repair as an option is less expensive than replacement. Hook fit 10 is a large article having a variable cross section, although the thickness of hook fit 10 in the region of crack 12 is about 88.9 mm (3.5 inches). Because of the thickness of the hook fit in the region of crack 12, welding requires preheat. Preheat will be at a preselected temperature, when required, and will be dependent on a number of variables, including material type, material composition and welding parameters. And, in order to minimize heat input that can result in welding-induced distortion, a narrow groove weld joint preparation is required. The challenge to welding using a narrow groove weld joint preparation is to make an effective root pass while maintaining uniform and sufficient penetration at both groove faces in order to avoid defects, such as lack of penetration or burn-through due to insufficient heat input or excessive heat input respectively. Difficulties with even a narrow groove weld joint are that it currently is a difficult weld for a welder to accomplish manually, making the task very operator dependent. The task of accomplishing a narrow groove weld in a thick part such as the N2 hook fit 10 is conducive to automation. This narrow groove weld can best be accomplished by a tribrid welding technique, which utilizes an arc welder, such as a metal inert gas (GMAW) torch, or a tungsten inert gas (GTAW) torch, the GTAW/GMAW welder providing filler metal, and a laser welding apparatus, to weld the root pass within the groove, and a hybrid welding technique to weld subsequent weld passes to fill the groove. However, conventional hybrid welding techniques alone utilizing arc welding and laser welding have been reported to result in hot cracking in multi-pass hybrid welding of thick section austenitic stainless steels, such as the Cr-Mo-V steel utilized in the N2 hook fit, due to high stress levels as additional layers are completed over a root pass.

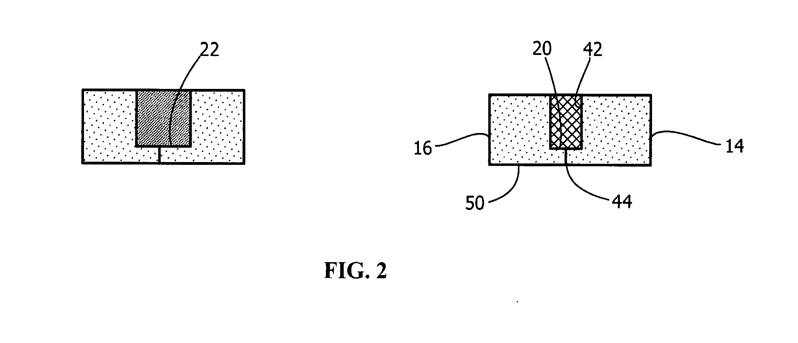

As used herein, a narrow groove weld joint preparation is defined to mean a weld joint having a width of up to about 25.4 mm (1 inch), and preferably about 12.7 mm (½ inch), and a depth of at least 25.4 mm to 304.8 mm (1 inch to 12 inches). Alternatively stated, a narrow groove weld joint preparation is a weld joint having a ratio of width to depth of 1:2 to 1:24, preferably 1:8 to 1:24, the width being sufficient to receive a welding torch in a gap between the parts to be joined, the current minimum welding torch size being about 11 mm (about 0.43 inches). Thus, based on current minimum welding torch size and access, the weld joint preparation could have a width as small as about 10.16 mm (0.4 inches). The difference between a narrow groove weld joint and a non-narrow groove weld joint is best illustrated by reference to Figure 2 in which a narrow groove weld joint preparation 20 can be compared to a non-narrow groove weld joint preparation 22. As is evident, narrow groove weld joint preparation 20 is more restrictive as compared to non-narrow groove weld joint preparation 22, so that a larger welding torch or device that may have access in non-narrow groove weld joint preparation 22 may not have access in narrow groove weld joint preparation 20, and non-narrow weld groove joint preparation 22 requires more filler metal than narrow weld groove joint preparation 22.

N2 hook fit 10 set forth in Figure 1 is divided into a first part, top 14, and a second part, base 16, by crack 12, and a weld preparation is machined. In order to accomplish a repair of the article utilizing the present invention, it is first necessary to provide a narrow groove weld joint. It is then necessary to successfully weld the root pass of the weld, which is accomplished in the present invention utilizing a novel tribrid laser welding technique.

The narrow groove weld can be accomplished by first preparing the narrow groove weld joint. This preparation is accomplished by separating top 14 and base 16 of N2 hook fit 10 along crack 12. Once top 14 and base 16 have been separated, there are optional ways of accomplishing the narrow groove weld joint preparation 20. A first optional method is to fabricate a new top 14 from compatible steel, such as Cr-Mo-V steel. New top 14 may have its portion of the corresponding narrow groove weld joint preparation formed in it, such as by machining to form an L-shaped groove face. Base 16 may be machined to form its portion of narrow groove weld joint preparation 20 by forming a corresponding L-shaped groove face. It will be recognized that, depending upon the crack path and machining required to accomplish separation, narrow groove joint preparation in top 14 may require the addition of weld material and subsequent machining in order to form a suitable L-shaped groove face for the narrow groove weld joint preparation 20.

A second optional method is to restore the top 14 after its separation from N2 hook fit 10. Removed top 14 is restored by the same process as base 16, described above, that is, weld metal is added as needed so that the L-shaped groove face for the narrow groove weld joint preparation 20 can be machined to the proper dimensions to mate with base 16, which has its mating L-shaped groove face for narrow groove weld joint preparation 20 formed as set forth as described above.

While the L-shaped groove faces forming narrow groove weld joint preparation are positioned together to form a butt joint, which implies that the faces form a right angle with or at the root, some deviation can be tolerated so that the faces can be offset. Thus the groove faces may form an angle of 80°-90° with the root so that when the faces are butted up against one another, a small gap may exist. Preferably, the L-shaped groove faces in top 14 and base 16 (or their equivalent parts) form an angle of 88-90° with the root so that any gap at an interface 44 between them when the faces are butted against one another is minimal. While narrow groove weld joint preparation is depicted in the figures as a butt joint, it is not so restricted and other well-known joint preparations may be used.

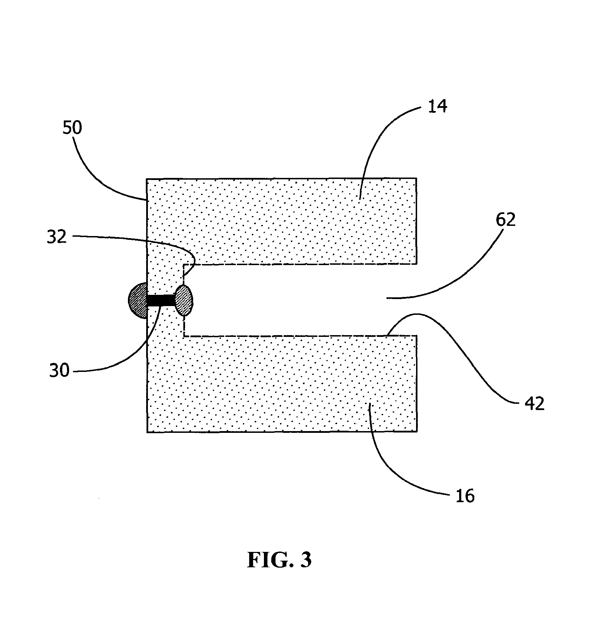

After portions of narrow groove weld joint preparation 20 have been formed in corresponding top 14 and base 16, top 14 and base 16 are positioned adjacent to each other to form a narrow groove weld joint preparation 20 as shown in Figure 2. Although not shown in Figure 2, some fixturing may be required to maintain proper fit-up of top 14 to base 16 during the welding process. Depending upon the material being welded, preheat to a preselected temperature or to a preselected temperature range of the base metal forming narrow groove weld joint preparation (here top 14 and base 16) may be required. Preheats for welding selected material systems such as mild steel, low alloy steel, aluminum and superalloys are known in the art and may vary among the systems, and the tribrid welding method of the present invention does not deviate from the prior art in this aspect. Referring to Figure 3, narrow groove 62 between top 14 and base 16 above the bottom 32 of weld joint is about 11 mm. A root pass 30 may then be formed at the bottom 32 of narrow groove weld joint preparation 20 where top 14 and base 16 abut against each other, that is, where they have their closest proximity or fit-up. The thickness of the root pass weld is about 3.175 mm (1/8 inch) in the demonstration example with Cr-Mo-V steel, and the thickness of the root pass for any material system will be dependent upon the laser power available, it being understood that at a predetermined welding speed, higher laser power can assist in penetrating a thicker root face.

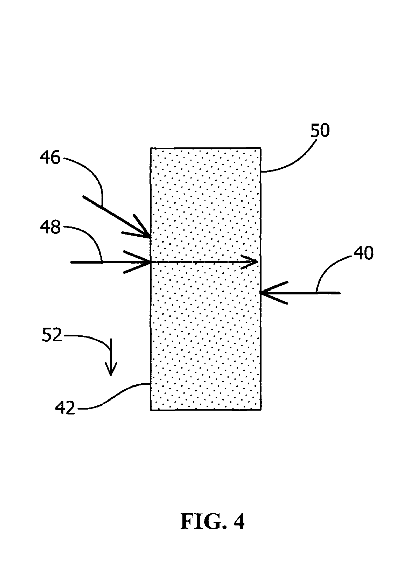

The tribrid laser welding technique used to accomplish the successful welding technique on a root pass is depicted in Figures 2-4, while Figure 4 depicts the bottom 32 of narrow groove weld joint preparation in cross-section. As can be seen, the tribrid laser welding technique uses three welding devices. A first arc welding device 40 is positioned on a narrow groove weld joint preparation on a side 50 opposite groove side of joint preparation 20. Preferably this arc welding device is a GMAW welding torch. A second arc welding device 46 is placed on the groove side of joint preparation 20 opposite interface 44 between base 16 and top 14. Preferably, the second arc welding device also is a GMAW welding torch. A third welding apparatus 48 is positioned on groove side 42 of narrow groove weld joint preparation 20, substantially opposite interface 44 between base 16 and top 14. Third welding apparatus preferably is a laser welding apparatus positioned on the same side of the narrow groove weld joint preparation as second GMAW welding torch. First GMAW torch 40 is positioned on narrow groove weld joint preparation 20 on a side 50 opposite the groove side of joint preparation 20 and interface 44, and thus is offset 180° from laser welding apparatus 48. Second GMAW torch 46 is angularly offset from first GMAW welding torch 40 and behind laser welding apparatus with respect to the welding direction. As depicted in Figure 4, the orientation of first, and second devices and third welding apparatus 40, 46 and 48 with respect to interface 44 for the root pass is such that second and third welding devices 46 and 48 are on the same side as groove side 42 of weld joint preparation 20, while first welding device 40 is on the opposite side of groove side 42 of weld joint preparation. With respect to interface 44, laser welding apparatus 48 lies between first GMAW torch 40 and second GMAW torch 46.

A fundamental aspect of the invention is that the three welding devices 40, 46 and 48 permit formation of a symmetric weld across the root face as the root pass is welded. This arrangement reduces welding-induced stresses as well as distortion in the root pass. The reduction is both stresses and distortion in the root pass is critical as additional weld metal is added to groove side 42 to complete the weld, this additional weld metal adding further stresses, which, if above a critical value, can result in cracking.

Because of the limited access to interface 44 on groove side 42 due to the geometric configuration of narrow groove weld joint preparation, some welding devices cannot be used on groove side 42. Third welding apparatus 48 preferably is a laser welding apparatus. Laser welding apparatus can be arranged so that the focus of the laser beam is directed onto interface 44 at bottom 32 of narrow groove weld joint on groove side 42, even though laser welding apparatus itself can be located outside of narrow groove weld preparation 20. However laser power must be sufficient to penetrate bottom 32 of narrow groove weld joint preparation. The power required will be dependent on a number of variables, such as welding speed, thickness of the narrow groove weld joint preparation 20 at interface 44, the base material composition as well as other factors. The thickness of the joint preparation may vary from about 3.175 mm to 12.7 mm (1/8 inch to about ½ inch). The welding speed may vary from about 762 mm/mn to 3048 mm/mn (30 inches per minute to 120 inches per minute), again depending on the other variables. The faster the welding speed, the less heat is input into the weld, making it the less likely that the welded article will experience distortion. Of course, the possibility of experiencing a lack of fusion defect also increases. Preferably, a welding speed of 2032 mm/mn (80 inches per minute) is preferred. However, a welding speed of about 1524 mm/mn (60 inches per minute) has been successfully demonstrated for a N2 hook fit comprising Cr-Mo-V steel. Second arc welding device 46 is limited to a device that can reach interface 44 from groove side 42.

A narrow-groove GTAW welding torch or a GMAW welding torch both are suitable for use as second welding device 46, as both are preferable dimensionally for use in welding a root pass 30 in a narrow groove weld joint preparation 20, although a GMAW welding torch is most preferred. First arc welding device 40 is less restricted as the physical limitations on side 50 opposite groove side are not as severe as on groove side 42, since side 50 opposite groove side is relatively open and exposed. Even though other welding techniques such as shielded metal arc welding and flux-cored arc welding may be available for use as first arc welding device 40, a GTAW welding torch or a GMAW welding torch are preferred. The welding devices, first arc welding device 40, second arc welding device 46, both of which preferably are GMAW/GTAW welding devices, and third welding apparatus 48, a laser welding apparatus, can be automated to move in a coordinated manner, either by fixturing or other computer-related controls and tooling beyond the scope of this invention.

After root pass 30 has been welded, it is inspected for defects which, if present, must be removed before additional filler passes can be added into narrow groove weld joint preparation overlying the root pass. After removal of any defects, the defective area may be repaired using any suitable welding technique. Once again, repairs from groove side 42 will limit the equipment available for use as welding apparatus that can be manipulated within narrow groove weld joint preparation 20. Thus, GTAW welding torch or GMAW welding torch may be required, although it is possible that a laser welding apparatus could be used to accomplish the repair. Repairs made from side 50 opposite groove side again will have more flexibility.

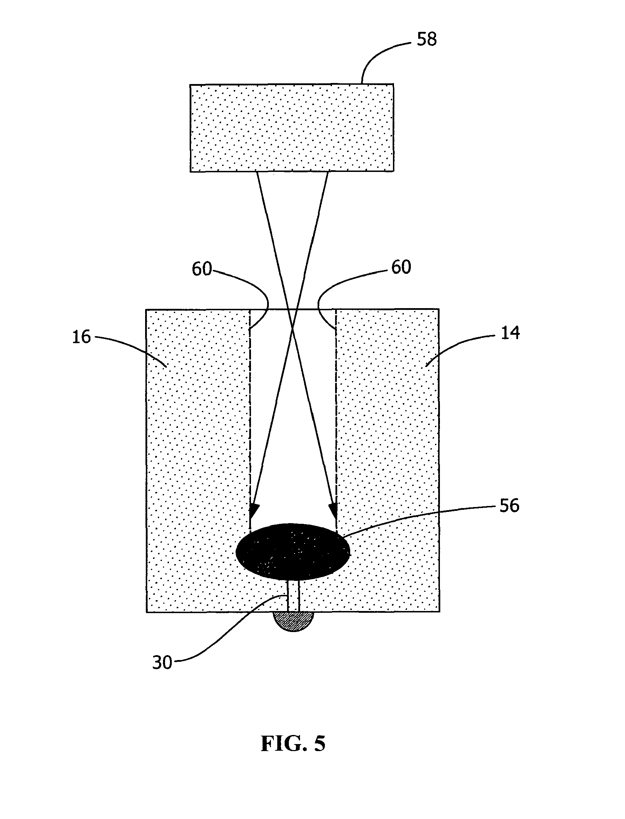

After root pass 30 has been successfully welded and inspected, the narrow groove weld joint preparation 20 may be filled using any technique that can successfully deposit weld metal within joint preparation. One successful technique has been the use of a hybrid laser technique, which utilizes a laser welding apparatus and a GMAW or GTAW welding torch to apply the additional fill passes. The hybrid laser technique differs from the tribrid laser technique in that the hybrid laser technique utilizes a laser welding apparatus with a positive defocused laser beam applied to the weld joint rather than a focused laser beam. The defocused laser welding apparatus operated in conjunction with a GMAW or GTAW welding torch allows the fill pass or passes to be deposited at a higher welding speed, resulting in reduced heat input, beneficially minimizing distortion and residual stress. The laser welding apparatus in the hybrid technique aids the weld by assisting in stabilizing the arc struck by either the GMAW or GTAW welding device, and, it not only strikes the molten weld puddle 56 in filling pass, but also strikes groove faces 60, as shown in Figure 5. A laser head 58 emitting a defocused beam utilized in a hybrid welding technique is depicted in Figure 5. Once again, depending upon the base metal, it may be necessary to preheat the narrow groove weld joint and any applied weld metal to a preselected temperature, the preselected temperature determined by the base metal.

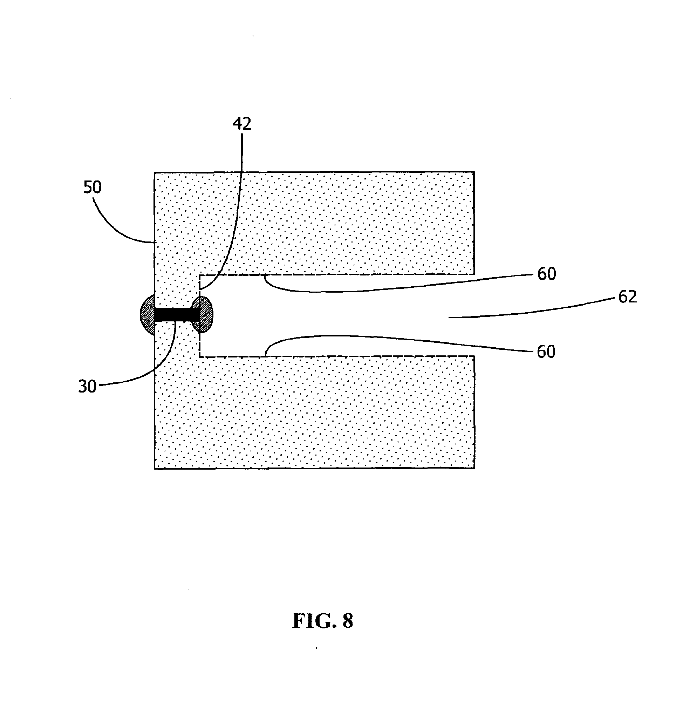

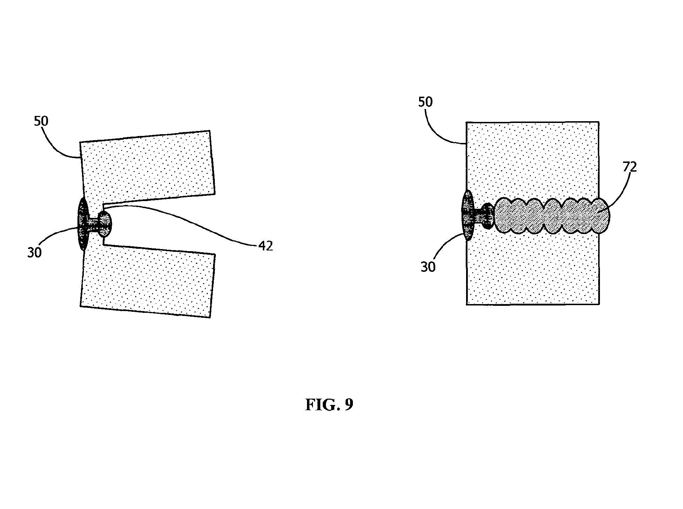

Although third welding apparatus 48 is according to the present invention a laser capable of delivering the required power to maintain a stable keyhole without burning through the root, first and second arc welding devices preferably are consumable electrode GMAW welding torches or non-consumable GTAW arc welding torches, the first and second arc welding devices being selected from the group consisting of consumable electrode GMAW apparatus, non-consumable GTAW welding apparatus, consumable electrode FCAW apparatus and non-consumable plasma arc welding apparatus. When the first and second arc welding devices are GMAW welding torches, the parameters for the GMAW welding torches may be identical to avoid welding induced distortion in the root pass. Figure 8 depicts a root pass 30 welded using identical GMAW welding parameters. However, weld induced distortion may occur as additional filler passes are added. First GMAW welding torch 40 and second GMAW welding torch 46 may utilize different welding parameters to adjust for solidification-induced deformation along the root pass so that overall distortion of the part can be achieved after completion of the filler passes, even though temporary welding distortion may be experienced by the completed root pass. Figure 9(a) depicts a completed root pass 30 welded using different welding parameters on either side of the narrow groove weld joint preparation. In Figure 9(a), only the root pass is completed, and the weld induced distortion predictably occurs as root pass 30 is completed. Note that the amount of metal deposited on the side opposite the groove side 50 is greater than the amount of metal deposited on groove side 42 within the groove as a result of the differing GMAW parameters on either side of the root. As additional filler passes 72 are completed, as depicted in Figure 9(b), the weld-induced deformation is corrected as the added metal from the additional filler passes solidifies in the narrow groove, resulting in shrinkage and deformation.

Whether identical parameters or different parameters are selected will depend upon the overall part design and weld joint configuration, which will vary.

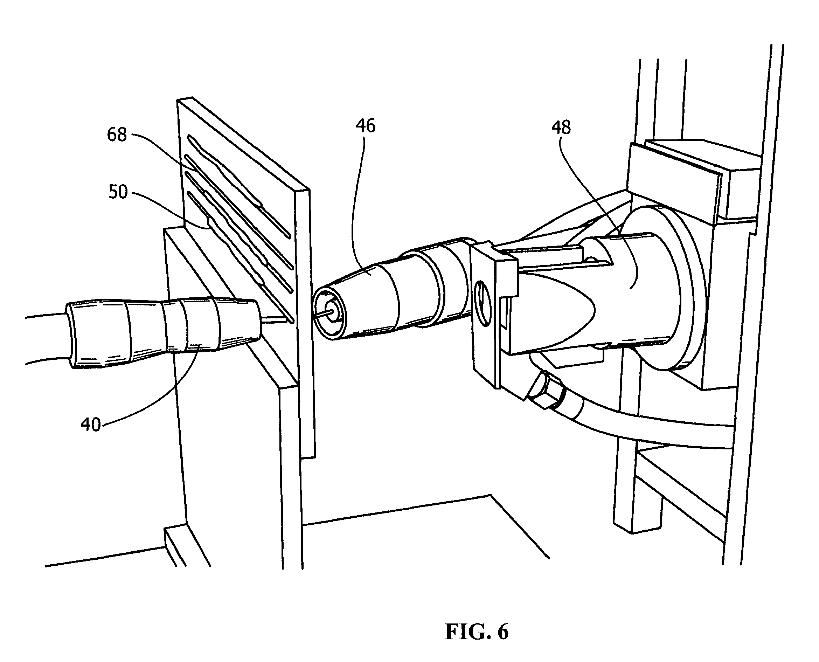

Figure 6 depicts a demonstration of the tribrid laser technique set forth above. Third welding device 48, a laser head, is depicted on the groove side of joint preparation in workpiece 68 adjacent second welding device 46, a GMAW welding torch. Filler metal extends from the GMAW welding torch in the direction of workpiece 68. A first welding device 40, a GMAW welding torch is depicted on side 50 opposite groove side, and filler metal also extends from this torch in the direction of workpiece 68. Fixturing of workpiece 68 is evident in the background as are electrical connections in the foreground.

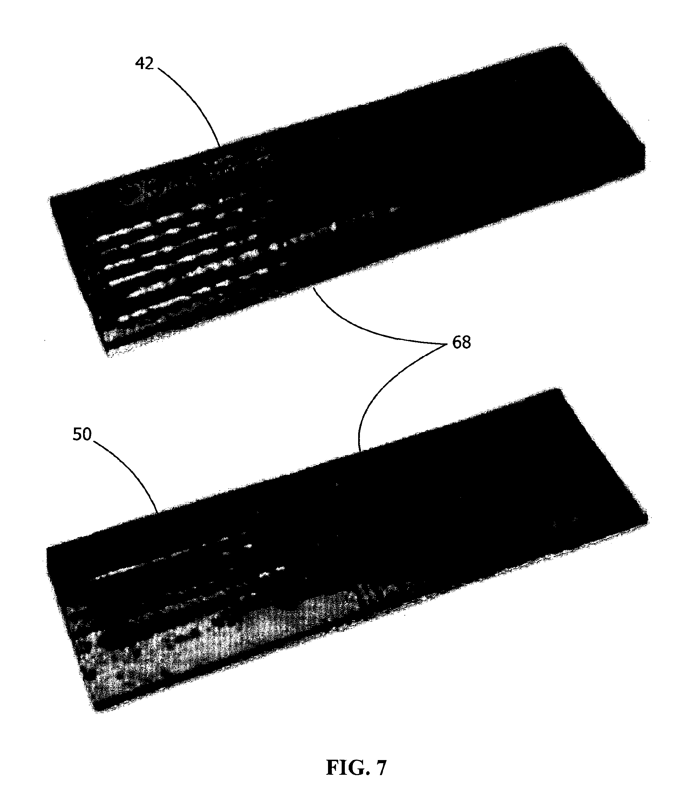

Figure 7 depicts the completed demonstration of welding of flat, planar workpiece 68. Root pass 30 was completed using the tribrid welding technique. Side 50 opposite groove face shows the back side of the completed root pass 30 welded using a GMAW welding torch. Groove side 42 depicts the completion of welding of narrow groove 62, which has been completed using the hybrid welding technique with a focused laser apparatus and GMAW welding torch of Figure 6. As can be seen in Figure 7, workpiece 68 does not disclose any distortion despite the completion of multiple weld joints.

The tribrid laser welding technique is not restricted for use on steels and may be used in other materials systems in which welding may be used to accomplish repair in thick sections, but weld distortion must be minimal. For welding on a Cr-Mo-V steel as described above, the thickness of the steel at interface 44 at bottom 32 of narrow grove weld joint preparation is 3.175 mm about (1/8"). The weld metal used for filler metal in the root pass and in subsequent passes to fill narrow groove weld joint preparation is Cr-Mo-V filler wire designated as ER80S-B3L, although other suitable filler wire may be utilized. A preheat of 176.6 °C (350° F) is applied to the narrow groove weld joint preparation while welding both root pass and filler passes. A tribrid welding technique is used to form root pass 30. The laser power for a laser beam focused at bottom 32 of narrow groove weld joint penetration along interface 44 is 1.8-4.0 kW, preferably about 3.5 kW, at a welding speed of 1524 mm/mn (60 inches per minute (60 ipm)). Groove side 42 welding parameters for a GMAW welding torch 46 at a welding speed of 60 ipm is about 18 volts (V) and 118 amps. It will be recognized that a GTAW welding torch may be substituted for the second GMAW welding torch 46, but different welding parameters may be required to accomplish GTAW welding. Side 50 opposite groove side welding parameters for a first arc welding device 40, a GMAW welding torch, at a welding speed of 1524 mm/mn (60 ipm) utilizes the same parameters as used in the second arc welding device, also a GMAW torch, about 18V and 118 amps. It will be recognized that a GTAW welding torch may be substituted for the first GMAW welding torch, but different welding parameters may be required to accomplish GTAW welding. Two arc welding devices, one on either side of the butt joint, assist in maintaining the preselected preheat, preferably about 176.6 °C (350° F), so that a satisfactory weld may be achieved. The welding parameters for subsequent fill passes for the Cr- Mo-V steel using a hybrid welding technique employs a defocused layer with a 20 mm positive defocus and, preferably, a GMAW welding torch. The parameters for welding subsequent layers are the same as for the root pass, but the defocused laser at 20 mm positive focus provides a laser beam spot focused at about 20 mm above the layer that is being applied, so the laser beam is spread out to contact groove faces 60.

As noted previously, the welding technique may be used for other material systems, for example for welding of mild steel, stainless steel, low alloy steel, aluminum and superalloys. The selected alloy system being welded may require pre-heating to a preselected temperature. However, the preheat is the same as required for other weld joints of the selected materials employing conventional welding techniques. These preheats are well known to the art and should be applied to the weld joint prior to applying power to strike arcs. The thickness of the test weld example for stainless steel at interface 44, at bottom 32 of narrow grove weld joint preparation, is about 6.1 mm (1/4"). The weld metal used for filler metal in the root pass and in subsequent passes to fill narrow groove weld joint preparation is stainless steel filler wire designated as 308L, although other suitable filler wire may be utilized. A tribrid welding technique is used to form root pass 30. The laser power for a laser beam focused at bottom 32 of narrow groove weld joint penetration along interface 44 is 3.5 kW, preferably about 4 kW, at a welding speed of 1524 mm/mn (60 inches per minute (60 ipm)). The groove side 42 welding parameters for a GMAW welding torch at a welding speed of 60 ipm are about 18V and 118 amps. Side 50 opposite groove side welding parameters for a GMAW welding torch at a welding speed of 60 ipm are about 18V and 118 amps. The welding parameters for subsequent fill passes for the stainless steel using a hybrid welding technique employing a defocused layer with a 20 mm positive defocus and a GMAW welding torch are the same as used to weld the root pass 30, but the defocused laser at 20 mm positive defocus provides a laser beam spot impinged on the previous layer as the layer is applied, so the beam spreads out to contact groove faces 60.

For the stainless steel 304/304L in the test example, no preheat or post heat treatment was utilized, nor is it required. However, other materials, such as for example Cr-Mo-V steel, a preheat and/or a post heat treatment may be required. Whether a preheat or post-weld heat treatment may be required, and the specifics of such heat treatments may be determined by general codes or standards for welding of such materials.

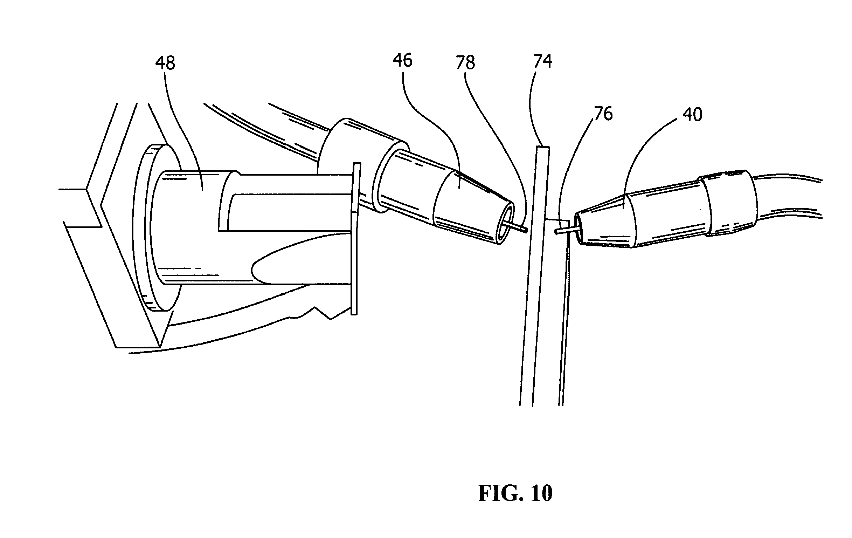

Figure 10 provides another view of the tribrid apparatus of the present invention in a demonstration mode for welding a demonstration plate. GMAW welding torch 40 is depicted on a first side of demonstration plate 74, with filler metal 76 extending from GMAW welding torch 40 toward demonstration plate 74. Second GMAW welding torch 46 and laser welding apparatus 48 are visible on the second side of demonstration plate 74 with filler metal 78 extending from GMAW welding torch 46 toward demonstration plate 74.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

## Claims

1. A method of joining metal sections (12, 14), comprising the steps of:
providing a first section (14) having first substantially L-shaped groove face (60);
providing a second section (16) having a second substantially L-shaped groove face (60);
aligning the first groove face (60) of the first section (14) against the second groove face (60) of the second section (16) to form a narrow weld groove (62) in which the metal sections form a butt joint along an interface (44) at a root having a centerline and a groove above the root wherein the first groove face (60) and the second groove face (60) are separated by a predetermined distance above the butt joint; and **characterized by** the following steps:
providing a first arc welding device (40) and aligning the arc welding device (40) against the root on a side (50) of the butt joint opposite the groove (42) and offset from a first side of the root centerline;
providing a second arc welding device (46) and aligning the second arc welding device (46) against the root within the groove (62) and offset from a second, opposite side of the root centerline;
providing a laser welding apparatus (48) and aligning the laser welding apparatus (48) so that the laser beam is aligned with the root centerline and focused at the interface (44);
simultaneously applying power to the first arc welding device (40) to strike an arc, the second arc welding device (46) to strike an arc and to the laser welding apparatus (48), to establish a stable keyhole while forming a common pool (56) of molten metal at the root without burning through the root, while supplying filler metal (72) with the two arc welding devices (40,46); and
moving the first arc welding device (40), the second arc welding device (46) and the laser welding apparatus (48) simultaneously relative to the root to form a full penetration weld along a length of the root pass (30).

2. The method of claim 1, further including the step of preheating the butt joint to a preselected temperature prior to the step of simultaneously applying power to form the molten pool (56).

3. The method of claim 1 or 2, wherein the step of providing a first arc welding device (40) and a second arc welding device (46) includes selecting the first and the second arc welding devices (40,46) from the group consisting of consumable electrode GMAW welding devices, consumable electrode GMAW devices, consumable electrode FCAW devices, non-consumable electrode GTAW welding devices and non-consumable plasma arc welding devices.

4. The method of claim 3 wherein the step of providing a first arc welding device (40) includes providing a GMAW welding device (46), and a second arc welding device includes providing a GMAW welding device, and wherein welding parameters for the first GMAW welding device (40) and the second GMAW welding device (46) are selected to be substantially identical.

5. The method of claim 3 wherein the step of providing a first arc welding device (40) includes providing a GMAW welding device (46), and a second arc welding device includes providing a GMAW welding device, and wherein welding parameters for the first GMAW welding device (40) and the second GMAW welding device (46) are selected to be different.

6. The method of any preceding claim, further including the step of inspecting the full penetration weld formed along the length of the root pass (30) to detect defects, removing any detected defects from the root pass (30) and repairing the areas in which defects were removed by subsequent welding.

7. The method of any preceding claim, further including a step of filling the narrow groove weld joint preparation (20) above the root pass (30) with filler metal.

8. The method of claim 7, wherein the step of filling the groove (62) above the root with filler metal further comprises the steps of
providing an arc welding device (40) above the root pass (30) in the groove (62);
providing the laser welding apparatus (48) and aligning the laser welding apparatus (48) so that the laser beam is defocused above the root pass (30) and onto the first groove face (60) and the second groove face (60);
providing power to the laser welding apparatus (48) and the arc welding device (40) while striking an arc with the arc welding device (40);
feeding weld metal into the groove (62) above the root pass (30) with the arc welding device (40) while heating and partially melting the first groove face (60) and the second groove face (60) above the root pass (30) while moving the arc welding device (40) and the laser welding apparatus simultaneously and in synchronization with respect to the root pass (30) to form a first fill pass weld in the narrow groove weld joint (20) immediately above and with the root pass weld;
repeating the steps of providing the arc welding device (40), providing the laser welding unit, providing power and feeding weld metal to form additional fill passes in the narrow groove weld joint until the groove (62) is filled with weld metal.

9. The method of claim 8, further including the step of maintaining the narrow groove weld joint and the feed weld metal within a preselected interpass temperature range prior to the step of applying power to the laser welding apparatus (48) and the arc welding device (40).

10. The method of claim 8 or 9, further including the additional step of inspecting the applied fill pass prior to repeating the steps in forming additional fill passes.

11. The method of any preceding claim, wherein the first substantially L-shaped groove face (60) and the second substantially L-shaped groove face (60) form an angle from 80° to 90° with the root.

12. The method of any preceding claim, wherein the first section (14) and the second section (16) comprise Cr-Mo-V steel.

13. The method of any preceding claim, wherein the first section (14) and the second section (16) comprise one of the materials selected from the group consisting of mild steel, low alloy steel, aluminum and superalloys.

## Patentansprüche

1. Verfahren zum Verbinden von Metallsektionen (12, 14), das die folgenden Schritte umfasst:
das Bereitstellen einer ersten Sektion (14), die eine erste im Wesentlichen L-förmige Fugenfläche (60) hat,
das Bereitstellen einer zweiten Sektion (16), die eine zweite im Wesentlichen L-förmige Fugenfläche (60) hat,
das Ausrichten der ersten Fugenfläche (60) der ersten Sektion (14) gegenüber der zweiten Fugenfläche (60) der zweiten Sektion (16), um eine schmale Schweißfuge (62) zu bilden, in der die Metallsektionen einen stumpfen Stoß entlang einer Grenzfläche (44) an einer Wurzel, die eine Mittellinie hat, und eine Fuge oberhalb der Wurzel bilden, wobei die erste Fugenfläche (60) und die zweite Fugenfläche (60) um einen vorbestimmten Abstand oberhalb des stumpfen Stoßes getrennt sind, und **gekennzeichnet durch** die folgenden Schritte:
das Bereitstellen einer ersten Lichtbogenschweißeinrichtung (40) und das Ausrichten der Lichtbogenschweißeinrichtung (40) gegenüber der Wurzel auf einer Seite (50) des stumpfen Stoßes, entgegengesetzt zu der Fuge (42) und versetzt von einer ersten Seite der Wurzelmittellinie,
das Bereitstellen einer zweiten Lichtbogenschweißeinrichtung (46) und das Ausrichten der zweiten Lichtbogenschweißeinrichtung (46) gegenüber der Wurzel innerhalb der Fuge (62) und versetzt von einer zweiten, entgegengesetzten Seite der Wurzelmittellinie,
das Bereitstellen einer Laserschweißvorrichtung (48) und das Ausrichten der Laserschweißvorrichtung (48), so dass der Laserstrahl an der Wurzelmittellinie ausgerichtet und an der Grenzfläche (44) fokussiert wird,
das gleichzeitige Anlegen von Leistung an die erste Lichtbogenschweißeinrichtung (40), um einen Lichtbogen zu zünden, die zweite Lichtbogenschweißeinrichtung (46), um einen Lichtbogen zu zünden, und an die Laserschweißvorrichtung (48), um ein stabiles Schlüsselloch herzustellen, während ein gemeinsames Bad (56) von geschmolzenem Metall an der Wurzel gebildet wird, ohne die Wurzel zu verbrennen, während mit den zwei Lichtbogenschweißeinrichtungen (40, 46) Zusatzmetall (72) zugeführt wird, und
das gleichzeitige Bewegen der ersten Lichtbogenschweißeinrichtung (40), der zweiten Lichtbogenschweißeinrichtung (46) und der Laserschweißvorrichtung (48) im Verhältnis zu der Wurzel, um eine durchgeschweißte Naht entlang einer Länge der Wurzellage (30) zu bilden.

2. Verfahren nach Anspruch 1, das ferner den Schritt des Vorheizens des stumpfen Stoßes auf eine vorgewählte Temperatur vor dem Schritt des gleichzeitigen Anlegens von Leistung zum Bilden des geschmolzenen Bades (56) einschließt.

3. Verfahren nach Anspruch 1 oder 2, wobei der Schritt des Bereitstellens einer ersten Lichtbogenschweißeinrichtung (40) und einer zweiten Lichtbogenschweißeinrichtung (46) das Auswählen der ersten und der zweiten Lichtbogenschweißeinrichtung (40, 46) aus der Gruppe, die aus MSG-Schweißeinrichtungen mit abschmelzender Elektrode, MSG-Einrichtungen mit abschmelzender Elektrode, Fülldraht-Lichtbogenschweißeinrichtungen mit abschmelzender Elektrode, WIG-Schweißeinrichtungen mit nicht abschmelzender Elektrode und Plasmabogen-Schweißeinrichtungen mit nicht abschmelzender Elektrode besteht, einschließt.

4. Verfahren nach Anspruch 3, wobei der Schritt des Bereitstellens einer ersten Lichtbogenschweißeinrichtung (40) das Bereitstellen einer MSG-Schweißeinrichtung (46) einschließt und einer zweiten Lichtbogenschweißeinrichtung das Bereitstellen einer MSG-Schweißeinrichtung einschließt und wobei die Schweißparameter für die erste MSG-Schweißeinrichtung (40) und die zweite MSG-Schweißeinrichtung (46) so gewählt werden, dass sie im Wesentlichen identisch sind.

5. Verfahren nach Anspruch 3, wobei der Schritt des Bereitstellens einer ersten Lichtbogenschweißeinrichtung (40) das Bereitstellen einer MSG-Schweißeinrichtung (46) einschließt und einer zweiten Lichtbogenschweißeinrichtung das Bereitstellen einer MSG-Schweißeinrichtung einschließt und wobei die Schweißparameter für die erste MSG-Schweißeinrichtung (40) und die zweite MSG-Schweißeinrichtung (46) so gewählt werden, dass sie unterschiedlich sind.

6. Verfahren nach einem der vorhergehenden Ansprüche, das ferner Folgendes einschließt: den Schritt des Prüfens der entlang der Länge der Wurzellage (30) gebildeten durchgeschweißten Naht, um Fehler zu erkennen, des Entfernens jeglicher erkannter Fehler von der Wurzellage (30) und des Reparierens der Bereiche, in denen Fehler entfernt wurden, durch anschließendes Schweißen.

7. Verfahren nach einem der vorhergehenden Ansprüche, das ferner einen Schritt des Füllens der Schmalfugen-Schweißverbindungsvorbereitung (20) oberhalb der Wurzellage (30) mit Zusatzmetall einschließt.

8. Verfahren nach Anspruch 7, wobei der Schritt des Füllens der Fuge (62) oberhalb der Wurzel mit Zusatzmetall die folgenden Schritte umfasst:
das Bereitstellen einer Lichtbogenschweißeinrichtung (40) oberhalb der Wurzellage (30) in der Fuge (62),
das Bereitstellen der Laserschweißvorrichtung (48) und das Ausrichten der Laserschweißvorrichtung (48), so dass der Laserstrahl oberhalb der Wurzellage (30) und auf die erste Fugenfläche (60) und die zweite Fugenfläche (60) defokussiert wird,
das Anlegen von Leistung an die Laserschweißvorrichtung (48) und die Lichtbogenschweißeinrichtung (40) während mit der Lichtbogenschweißeinrichtung (40) ein Lichtbogen gezündet wird,
das Einspeisen von Schweißgut in die Fuge (62) oberhalb der Wurzellage (30) mit der Lichtbogenschweißeinrichtung (40) während die erste Fugenfläche (60) und die zweite Fugenfläche (60) oberhalb der Wurzellage (30) erhitzt und teilweise geschmolzen werden, während die Lichtbogenschweißeinrichtung (40) und die Laserschweißvorrichtung gleichzeitig und synchron in Bezug auf die Wurzellage (30) bewegt werden, um eine erste Fülllagenschweißung in der Schmalfugen-Schweißverbindung (20) unmittelbar oberhalb und mit der Wurzellagenschweißung zu bilden,
das Wiederholen der Schritte des Bereitstellens der Lichtbogenschweißeinrichtung (40), des Bereitstellens des Laserschweißgeräts, des Anlegens von Leistung und des Einspeisens von Schweißgut, um zusätzliche Fülllagen in der Schmalfugen-Schweißverbindung zu bilden, bis die Fuge (62) mit Schweißgut gefüllt ist.

9. Verfahren nach Anspruch 8, das ferner den Schritt des Erhaltens der Schmalfugen-Schweißverbindung und des eingespeisten Schweißmetalls innerhalb eines vorbestimmten Zwischenlagentemperaturbereichs vor dem Schritt des Anlegens von Leistung an die Laserschweißvorrichtung (48) und die Lichtbogenschweißeinrichtung (40) einschließt.

10. Verfahren nach Anspruch 8 oder 9, das ferner den zusätzlichen Schritt des Prüfens der aufgebrachten Fülllage vor dem Wiederholen der Schritte beim Bilden von zusätzlichen Fülllagen einschließt.

11. Verfahren nach einem der vorhergehenden Ansprüche, wobei die erste im Wesentlichen L-förmige Fugenfläche (60) und die zweite im Wesentlichen L-förmige Fugenfläche (60) einen Winkel von 80° bis 90° mit der Wurzel bilden.

12. Verfahren nach einem der vorhergehenden Ansprüche, wobei die erste Sektion (14) und die zweite Sektion (16) Cr-Mo-V-Stahl umfassen.

13. Verfahren nach einem der vorhergehenden Ansprüche, wobei die erste Sektion (14) und die zweite Sektion (16) eines der Materialien umfassen, die ausgewählt sind aus der Gruppe, die aus unlegiertem Stahl, niedriglegiertem Stahl, Aluminium und Superlegierungen besteht.

## Revendications

1. Procédé de jonction de sections métalliques (12, 14), comprenant les étapes consistant à :
fournir une première section (14) ayant une première face à rainure sensiblement en forme de L (60) ;
fournir une seconde section (16) ayant une seconde face à rainure sensiblement en forme de L (60) ;
aligner la première face à rainure (60) de la première section (14) contre la seconde face à rainure (60) de la seconde section (16) pour former une rainure de soudage étroite (62), dans laquelle les sections métalliques forment un joint d'aboutement le long d'une interface (44) sur une base présentant un axe et une rainure au-dessus de la base, dans lequel la première face à rainure (60) et la seconde face à rainure (60) sont séparées d'une distance prédéterminée au-dessus du joint d'aboutement ; et **caractérisé par** les étapes consistant à :
fournir un premier dispositif de soudage à l'arc (40) et aligner le dispositif de soudage à l'arc (40) contre la base d'un côté (50) du joint d'aboutement opposé à la rainure (42) et en décalage d'un premier côté de l'axe de la base ;
fournir un second dispositif de soudage à l'arc (46) et aligner le second dispositif de soudage à l'arc (46) contre la base dans la rainure (42) et en décalage d'un second côté opposé de l'axe de la base ;
fournir un appareil de soudage à laser (48) et aligner l'appareil de soudage à laser (48) de sorte que le faisceau laser soit aligné avec l'axe de la base et focalisé sur l'interface (44) ;
appliquer simultanément de l'énergie au premier dispositif de soudage à l'arc (40) pour déclencher un arc, au second dispositif de soudage à l'arc (46) pour déclencher un arc et à l'appareil de soudage à laser (48) pour établir un trou de serrure tout en formant un bain commun (56) de métal fondu sur la base sans pénétrer à travers celle-ci, tout en fournissant du métal d'appoint (72) avec les deux dispositifs de soudage à l'arc (40, 46) ; et
déplacer le premier dispositif de soudage à l'arc (40), le second dispositif de soudage à l'arc (46) et l'appareil de soudage au laser (48) simultanément par rapport à la base pour former une soudure de pleine pénétration sur la longueur de la passe de base (30).

2. Procédé selon la revendication 1, comprenant en outre l'étape de préchauffage du joint d'aboutement à une température présélectionnée avant l'étape d'application simultanée d'énergie pour former le bain fondu (56).

3. Procédé selon la revendication 1 ou la revendication 2, dans lequel l'étape de fourniture d'un premier dispositif de soudage à l'arc (40) et d'un second dispositif de soudage à l'arc (46) comprend la sélection du premier et du second dispositif de soudage à l'arc (40, 46) dans le groupe constitué des dispositifs de soudage GMAW à électrodes consommables, des dispositifs GMAW à électrodes consommables, des dispositifs FCAW à électrodes consommables, des dispositifs de soudage GTAW à électrodes non consommables et des dispositifs de soudage à arc et au plasma non consumables.

4. Procédé selon la revendication 3, dans lequel l'étape de fourniture d'un premier dispositif de soudage à l'arc (40) comprend la fourniture d'un dispositif de soudage GMAW (46) et celle d'un second dispositif de soudage à l'arc comprend la fourniture d'un dispositif de soudage GMAW, et dans lequel les paramètres de soudage pour le premier dispositif de soudage GMAW (40) et le second dispositif de soudage GMAW (46) sont choisis pour être sensiblement identiques.

5. Procédé selon la revendication 3, dans lequel l'étape de fourniture d'un premier dispositif de soudage à l'arc (40) comprend la fourniture d'un dispositif de soudage GMAW (46) et celle d'un second dispositif de soudage à l'arc comprend la fourniture d'un dispositif de soudage GMAW et dans lequel les paramètres pour le premier dispositif de soudage GMAW (40) et le second dispositif de soudage GMAW (46) sont choisis pour être différents.

6. Procédé selon l'une quelconque des revendications précédentes, comprenant en outre l'étape d'inspection de la soudure de pleine pénétration formée sur la longueur de la passe de base (30) pour détecter des défauts, éliminer les défauts éventuels détectés de la passe de base (30) et réparer les zones dans lesquelles des défauts ont été éliminés par soudage ultérieur.

7. Procédé selon l'une quelconque des revendications précédentes, comprenant en outre une étape de remplissage de la préparation de jonction de soudure de rainure étroite (20) au-dessus de la passe de base (30) avec du métal d'appoint.

8. Procédé selon la revendication 7, dans lequel l'étape de remplissage de la rainure (62) au-dessus de la base avec du métal d'appoint comprend en outre les étapes consistant à :
fournir un dispositif de soudage à l'arc (40) au-dessus de la passe de base (30) dans la rainure (62) ;
fournir l'appareil de soudage au laser (48) et aligner l'appareil de soudage au laser (48) de sorte que le faisceau laser soit défocalisé au-dessus de la passe de base (30) et sur la première face à rainure (60) et la seconde face à rainure (60) ;
fournir de l'énergie à l'appareil de soudage à laser (48) et au dispositif de soudage à l'arc (40) tout en déclenchant un arc avec le dispositif de soudage à l'arc (40) ;
acheminer du métal de soudage dans la rainure (62) au-dessus de la passe de base (30) avec le dispositif de soudage à l'arc (40) tout en chauffant et en fondant partiellement la première face à rainure (60) et la seconde face à rainure (60) au-dessus de la passe de base (30) tout en déplaçant le dispositif de soudage à l'arc (40) et l'appareil de soudage à laser simultanément et en synchronisation par rapport à la passe de base (30) pour former une première soudure de la passe de remplissage dans le joint de soudure de rainure étroite (20) immédiatement au-dessus et avec la soudure de la passe de base ;
répéter les étapes de fourniture du dispositif de soudage à l'arc (40), de fourniture de l'unité de soudage au laser, de fourniture d'énergie et de fourniture de métal de soudage pour former des passes de remplissage supplémentaires dans le joint de soudure de rainure étroite jusqu'à ce que la rainure (62) soit remplie de métal de soudage.

9. Procédé selon la revendication 8, comprenant en outre l'étape de maintien du joint de soudure de rainure étroite et du métal de soudure d'alimentation dans une plage présélectionnée de températures entre passes avant l'étape d'application d'énergie à l'appareil de soudage à laser (48) et au dispositif de soudage à l'arc (40).

10. Procédé selon la revendication 8 ou la revendication 9, comprenant en outre l'étape supplémentaire d'inspection de la passe de remplissage appliquée avant de répéter les étapes dans la formation de passes de remplissage supplémentaires.

11. Procédé selon l'une quelconque des revendications précédentes, dans lequel la première face à rainure sensiblement en forme de L (60) et la seconde face à rainure sensiblement en forme de L (60) forment un angle de 80° à 90° avec la base.

12. Procédé selon l'une quelconque des revendications précédentes, dans lequel la première section (14) et la seconde section (16) comprennent de l'acier de Cr-Mo-V.

13. Procédé selon l'une quelconque des revendications précédentes, dans lequel la première section (14) et la seconde section (16) comprennent l'un des matériaux choisis dans le groupe constitué de l'acier doux, de l'acier faiblement allié, de l'aluminium et des superalliages.
